# EUROPEAN PATENT APPLICATION

(11) **EP 2 799 816 A1**
(43) Date of publication of application: **05.11.2014**
(21) Application number: 14163969.0
(22) Date of filing: 09.04.2014
(51) Int. Cl.: G01C 21/34

(54) **A method for navigation and a device thereof**

(30) Priority: 29.04.2013 IN CH18982013
(71) Applicant: ROBERT BOSCH GMBH, 70442 Stuttgart (DE); Robert Bosch Engineering And Business Solutions Limited, Bangalore 560 095 State of Karnataka (IN)
(72) Inventor: Gumaste, Keshav Raghavendra, 560085 Bangalore (IN); Narasimhan, Arthi, 560102 Bangalore (IN)

(57) **Abstract**

A navigation device (100) to provide optimal navigation guidance is disclosed. The navigation device (100) comprises a position determination means (101) determines a current position of the vehicle from a destination. A calculation means (102) calculates a walkable distance and a drivable distance to the destination from the current position. A comparison means (103) compares the walkable distance with the drivable distance based on user defined inputs to obtain an optimal distance to the destination. A suggestion means (104) suggests optimal navigation guidance to the destination from the current position based on the obtained optimal distance.

## Description

### The following specification describes and ascertains the nature of this invention and the manner in which it is to be performed:

### Field of the invention

The invention relates to a method for navigation using a navigation device. More particularly, it relates to suggesting an optimal navigation guidance to a destination from a current position of a vehicle based on an optimal distance obtained by comparing a walkable distance with a drivable distance from the current position to the destination.

### Background of the invention

A navigation device provides information about route information to a user. The navigation device detects a current position of a vehicle of a user and guides the user to a destination entered by the user. The prior art, US patent Application, 20130041582 discloses a method for navigation of a vehicle using a navigation system with stored map data having road segments. It comprises determining a current road segment from the stored map data by comparing the current position and a predefined position range of the road segment and receiving a user input command. It further determines a destination in the current road segment or in another road segment of a parallel lane of the current road segment. A route from the current position of the vehicle to the destination is calculated in the absence of a turn-around maneuver within the current road segment.

### Object of the invention

The object of the invention is to provide optimal navigation guidance using a navigation device. The navigation device determines a current position of a vehicle from a destination specified by a user of the vehicle. The navigation device calculates a walkable distance and a drivable distance to the destination from the current position of the vehicle. The navigation device calculates the drivable distance from the current position of the vehicle to the destination considering the driving conditions via the route to the destination, for example, one-way road segments, traffic jams, etc. The navigation device calculates the walkable distance based on the distance the user is required to walk to reach the destination from the current position of the vehicle. The navigation device further compares the calculated walkable distance with the calculated drivable distance based on user defined inputs, for example, a pre defined walkable distance and a pre defined drivable distance, to obtain an optimal distance to the destination. The navigation device suggests optimal navigation guidance to the destination from the current position based on the obtained optimal distance.

### Advantages of the invention

The navigation device provides optimal navigation guidance to the destination from a current position of a vehicle based an optimal distance obtained by comparing a walkable distance and a drivable distance to the destination from the current position of the vehicle. The navigation device suggests the user of the vehicle a shortest and fastest approachable way to reach the destination based on the obtained optimal distance. The optimal navigation guidance suggested by the navigation device results in less fuel consumption by the vehicle to reach the destination and thus eco-friendly. The optimal navigation guidance suggested by the navigation device also reduces the time to travel to reach the destination.

### Short description of the drawing

An exemplifying embodiment of the invention is explained in principle below with reference to the drawings. The drawings are,
Figure 1 illustrates a navigation device to suggest optimal navigation guidance in accordance with this invention.
Figure 2 illustrates an exemplary view of a screen of the navigation device displaying an optimal distance to a destination from a current position of the vehicle.
Figure 3 illustrates a flowchart of the method to provide optimal navigation guidance using the navigation device in accordance with this invention.

### Description of the invention

The invention relates to a method for navigation using a navigation device. The invention relates to suggesting optimal navigation guidance to a destination from a current position of a vehicle based on an optimal distance obtained by comparing a walkable distance with a drivable distance based on user defined inputs from the current position to the destination. According to the present invention, this is done by the features of the independent claims.

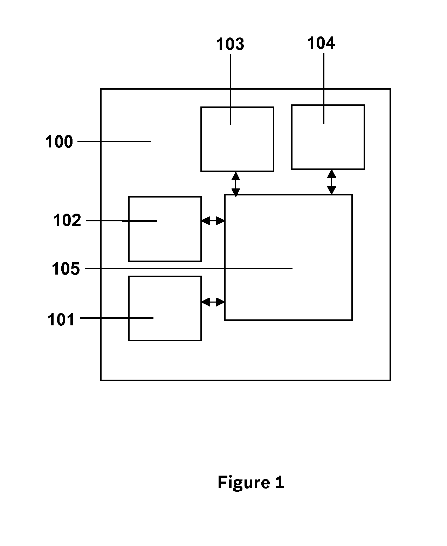

Figure 1 illustrates a navigation device (100) to provide optimal navigation guidance to a user of a vehicle from a current position of the vehicle to a destination in accordance with this invention. The navigation device (100) receives user defined inputs from the user of the vehicle. The user defined inputs are a pre defined walkable distance and a pre defined drivable distance to the destination. The pre defined walkable distance is the maximum distance the user can walk to reach the destination. The pre defined drivable distance is the drivable distance from the current position considering driving conditions, for example, one-way road segments, traffic jam along the route, etc., to reach the destination. The navigation device (100) comprises a position determination means (101) to determine the current position of the vehicle from the destination along the route entered by the user of the vehicle. A calculation means (102) of the navigation device (100) calculates a walkable distance and a drivable distance to the destination from the current position of the vehicle.

The navigation device (100) comprises a comparison means (103) to compare the walkable distance with the drivable distance based on the user defined inputs to obtain an optimal distance to the destination. A suggestion means (104) of the navigation device (100) suggests optimal navigation guidance to the destination from the current position based on the obtained optimal distance. The navigation device (100) compares the pre defined walkable distance with the walkable distance from the current position to the destination. The navigation device (100) also compares the pre defined drivable distance with the drivable distance from the current position to the destination. For example, if the walkable distance is lesser than the pre defined walkable distance and the drivable distance is greater than the pre defined drivable distance, then the navigation device (100) obtains the optimal distance as the walkable distance from the current position to the destination. The navigation device (100) further suggests the user to park the vehicle and walk the walkable distance to the destination from the current position rather than driving a drivable distance which is greater than the pre defined drivable distance. Thus the optimal navigation guidance suggested by the navigation device (100) thereby is an eco friendly route to reach the destination and reduces the fuel consumed by the vehicle to reach the destination. In another example, if either the walkable distance is greater than the pre defined walkable distance or the drivable distance is lesser than the pre defined drivable distance or both, then the navigation device (100) may suggest the user to continue to drive in the initial route entered by the user to reach the destination.

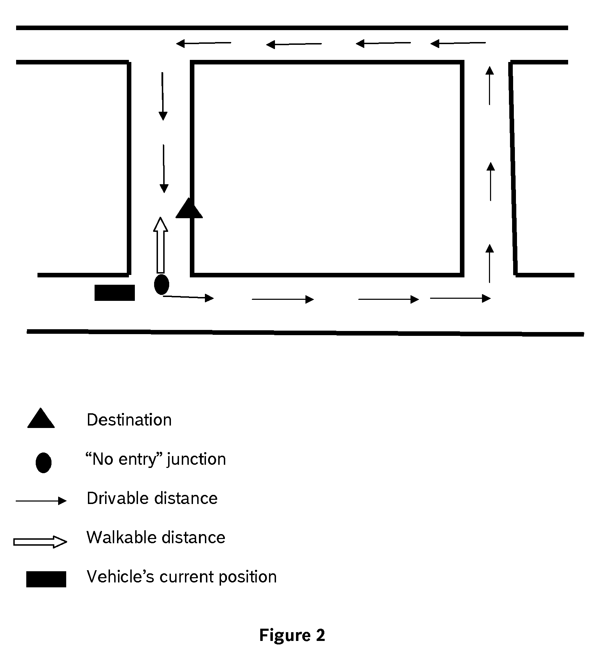

Figure 2 illustrates an exemplary view of a screen of the navigation device (100) displaying an optimal distance to a destination from a current position of the vehicle. Consider for example, the navigation device (100) receives the user defined inputs from a user at the start of a journey. The user enters a pre defined walkable distance to the destination as 100 meters. The user enters a pre defined drivable distance to the destination as 500 meters. The pre defined walkable distance and the pre defined drivable distance are the user defined inputs which are saved by the navigation device (100). The navigation device (100) also receives the destination details from the user at the start of the journey. The navigation device (100) calculates a route based on the received destination details. The navigation device (100) determines whether the destination is on a one-way road segment based on driving conditions via the calculated route. If the destination is not on a one-way road segment, then the navigation device (100) suggests the user to drive in the calculated route. If the destination is on a one-way road segment, then the navigation device (100) detects the current position of the vehicle as the vehicle approaches the destination via the calculated route. As the vehicle approaches a "no entry" junction to the destination on the one-way road segment, the navigation device (100) calculates the walkable distance and drivable distance to the destination from the "no entry" junction. In this example consider that the navigation device (100) calculates a walkable distance of 50 meters from the "no, entry" junction to the destination on the one-way road segment and a drivable distance of 800 meters from the "no entry" junction to reach the destination on the one-way road segment. This drivable distance is a roundabout route to reach the destination as the vehicle cannot enter the one-way road segment at the "no entry" junction. The navigation device (100) further compares whether the calculated walkable distance is lesser than the pre defined walkable distance of 100 meters. The navigation (100) also compares whether the calculated drivable distance is greater than the pre defined drivable distance of 500 meters. Since the walkable distance is 50 meters and lesser than the 100 meters pre defined walkable distance, the navigation device (100) obtains an optimal distance to the destination as the walkable distance of 50 meters from the "no entry" junction. The navigation device (100) then suggests the user to park the vehicle and walk the walkable distance of 50 meters as optimal navigation guidance to the destination from the "no entry" junction.

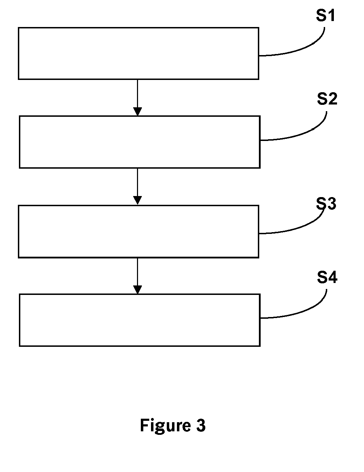

Figure 3 illustrates a flowchart of the method to provide optimal navigation guidance using the navigation device (100) in accordance with this invention. At step S1, a position determination means (101) determines a current position of the vehicle from a destination. At step S2, a calculation means (102) calculates a walkable distance and a drivable distance to the destination from the current position. At step S3, a comparison means (103) compares the walkable distance with the drivable distance based on user defined inputs to obtain an optimal distance to the destination. At step S4, a suggestion means (104) to suggest an optimal navigation guidance to the destination from the current position based on the obtained optimal distance.

It must be understood that the embodiments explained in the above detailed description in only illustrative and does not limit the scope of this invention. The scope of this invention is limited only by the scope of the claims. Many modification and changes in the embodiments aforementioned are envisaged and are within the scope of this invention.

## Claims

1. A method for navigation using a navigation device (100), comprising:
determining a current position of said vehicle from a destination;
calculating a walkable distance and a drivable distance to said destination from said current position;
comparing said walkable distance with said drivable distance based on user defined inputs to obtain an optimal distance to said destination; and
suggesting an optimal navigation guidance to said destination from said current position based on said obtained optimal distance.

2. A navigation device (100) for navigation, said navigation device (100) comprising:
a position determination means (101) to determine a current position of said vehicle from a destination;
a calculation means (102) to calculate a walkable distance and a drivable distance to said destination from said current position;
a comparison means (103) to compare said walkable distance with said drivable distance based on user defined inputs to obtain an optimal distance to said destination; and
a suggestion means (104) to suggest an optimal navigation guidance to said destination from said current position based on said obtained optimal distance.

3. The navigation device (100) as claimed in claim 1, wherein said navigation device (100) calculates said drivable distance based on driving conditions to reach said destination.

4. The navigation device (100) as claimed in claim 1, wherein said user defined inputs are pre defined walkable distance and pre defined drivable distance of a user of said vehicle.

5. The navigation device (100) as claimed in claim 1, wherein said walkable distance is the distance a user walks to reach said destination from said current position of said vehicle.
